# EUROPEAN PATENT APPLICATION

(11) **EP 3 785 899 A1**
(43) Date of publication of application: **03.03.2021**
(21) Application number: 19793788.1
(22) Date of filing: 24.04.2019
(51) Int. Cl.: B32B 7/06, B32B 25/20, B32B 27/00, C08J 7/04, C09J 201/00, C09J 7/10

(54) **SURFACE-MODIFIED SHEET, SURFACE-MODIFIED MEMBER, COATED ARTICLE, PRINTED ARTICLE, JOINED BODY, AND METHOD FOR MANUFACTURING SURFACE-MODIFIED MEMBER**

(30) Priority: 26.04.2018 JP 2018085670
(71) Applicant: NITTO DENKO CORPORATION, Ibaraki-shi Osaka 567-8680 (JP)
(72) Inventor: MAKIHATA, Yosuke, Ibaraki-shi, Osaka 567-8680 (JP); ENDO, Asuka, Ibaraki-shi, Osaka 567-8680 (JP); NAKAO, Eriko, Ibaraki-shi, Osaka 567-8680 (JP); OKADA, Kenichi, Ibaraki-shi, Osaka 567-8680 (JP); KAWATAKE, Fumika, Ibaraki-shi, Osaka 567-8680 (JP); NISHIYAMA, Naoyuki, Ibaraki-shi, Osaka 567-8680 (JP); SHIMOKAWA, Kayo, Ibaraki-shi, Osaka 567-8680 (JP)
(74) Representative: Müller-Boré & Partner Patentanwälte PartG mbB
(86) International application number: PCT/JP2019/017524
(87) International publication number: WO 2019/208665

(57) **Abstract**

The present invention relates to a surface-modifying sheet including a release sheet and a surface-modifying layer, and the surface-modifying layer containing a component that reacts with a thermosetting resin; a surface-modified member, a coated article, a printed article and a joined body, using the surface-modifying sheet; and a method for producing a surface-modified member.

## Description

### TECHNICAL FIELD

The present invention relates to a surface-modifying sheet, a surface-modified member, a coated article, a printed article, a joined body, and a method for producing a surface-modified member.

### BACKGROUND ART

In recent years, a thermosetting resin having lightweight and excellent shock resistance is used in a member of transport equipment such as railway vehicles, aircrafts, ships and automobiles, electronic equipment, housing equipment, and the like, and an adherend of various materials is joined to the surface thereof.

Pretreatment such as application of a primer layer, a preheating treatment, a corona discharge treatment, an electron beam irradiation treatment, an ultraviolet irradiation treatment, a flame plasma treatment, an atmospheric pressure plasma treatment or a low pressure plasma treatment is applied to the surface of a thermosetting resin in order to strongly join an adherend to the thermosetting resin.

Furthermore, a silicone adhesive or adhesive tape is used in order to join an adherend to a non-polar thermosetting elastomer such as a silicone rubber. However, a silicone adhesive has an insufficient adhesive force for the joining.

For this reason, a silane coupling agent or its condensate, those reaction products, an organotitanium compound such as an alkoxy titanium or a titanate coupling agent, and the like are known as a primer composition that is used for a silicone rubber.

For example, Patent Literature 1 describes an adhesive silicone composition containing an organosilicon compound and organotitanium compound having a specific structure, which are used for adhering a silicone rubber to a material other than the silicone rubber.

Patent Literature 2 describes a primer composition that has excellent adhesiveness in the surface of a substrate such as a glass or a metal or a placing joint surface to a preceding placed sealing material such as a silicone rubber and that is applied to a sealing material comprising a saturated hydrocarbon polymer having a reactive silicon group as a main component, and an adhering method.

Patent Literature 3 describes a primer composition containing an organotitanium compound and a solvent, which is used to adhere a silicone rubber to various adherends.

### CITATION LIST

### PATENT LITERATURE

Patent Literature 1: JP-S61-2107 B
Patent Literature 2: JP-H11-209702 A
Patent Literature 3: JP-2017-069290 A

### SUMMARY OF INVENTION

### PROBLEM TO BE SOLVED

However, a step of removing a release agent that is used in molding is required in order to perform a pretreatment before joining an adherend to the surface of a thermosetting resin or before applying a coating or a printing. In addition, a pretreatment or the like is required before formation of a primer layer. Furthermore, adhesion between a low polar compound and a polar compound and adhesion between a thermosetting resin and a thermoplastic resin were difficult even though a primer layer is used therefor.

Additionally, for a coated surface and a printed surface, a coating film or a printing is required to be evenly formed on the surface of a thermosetting resin. Thus, a primer layer is also required to be evenly formed on the surface of the thermosetting resin.

However, the primer compositions described in Patent Literatures 1 to 3 form a primer layer by application. Thus, it is difficult to evenly form a primer layer on the surface of a thermosetting resin due to, for example, occurrence of cissing of the primer layer. Furthermore, in applying a primer layer to a part of the surface of the thermosetting resin, there is a problem that yield is decreased by protrusion or the like.

There is further problem that the primer layer comprising an organic polymer as a main ingredient has poor compatibility and insufficient adhesive force to a low polar thermosetting resin.

In view of the above problems, the present invention has an object to provide a surface-modifying sheet that has excellent adhesive force, can evenly form a surface-modifying layer (primer layer) and can perform integral molding of a surface-modifying layer and a thermosetting resin in forming a surface-modified member. The present invention further has an object to provide a surface-modified member, a coated article, a printed article, a joined body, using the surface-modifying sheet, and a method for producing a surface-modified member.

### SOLUTION TO PROBLEM

The present inventors have made intensive and extensive investigations to solve the above problems. As a result, they have found that forming a surface-modifying layer into a sheet form and having a component that reacts with a thermosetting resin contained in the surface-modifying layer allow for providing a surface-modifying layer exerting sufficient adhesive force in joining a low polar resin and a polar resin, or a thermosetting resin and a thermoplastic resin, and allow for evenly forming a surface-modifying layer on an arbitrary place. Therefore, they have reached to complete the present invention.

One embodiment of the present invention relates to a surface-modifying sheet comprising a release sheet and a surface-modifying layer, wherein the surface-modifying layer contains a component that reacts with a thermosetting resin.

In one embodiment of the present invention, the surface-modifying sheet is that the component that reacts with a thermosetting resin may contain at least one of a curing agent, a polymer component containing a group having an unsaturated bond having reactivity, and a mixture of a polymer component not containing a group having an unsaturated bond having reactivity and a peroxide.

In one embodiment of the present invention, the thermosetting resin may be a thermosetting elastomer, in the surface-modifying sheet.

In one embodiment of the present invention, the thermosetting resin may be a non-diene rubber containing no double bond, in the surface-modifying sheet.

In one embodiment of the present invention, the thermosetting resin may be a silicone resin or a silicone rubber, in the surface-modifying sheet.

One embodiment of the present invention is a surface-modified member in which a surface-modifying layer is laminated on the surface of a thermosetting resin, wherein the surface-modifying layer contains a component that reacts with the thermosetting resin, and the thermosetting resin is bonded to the surface-modifying layer by chemical reaction.

In one embodiment of the present invention, for the surface-modified member, the component that reacts with a thermosetting resin may contain at least one of a curing agent, a polymer component containing a group having an unsaturated bond having reactivity, and a mixture of a polymer component not containing a group having an unsaturated bond having reactivity and a peroxide.

In one embodiment of the present invention, the thermosetting resin may be a thermosetting elastomer, in the surface-modified member.

In one embodiment of the present invention, the thermosetting resin may be a non-diene rubber containing no double bond, in the surface-modified member.

In one embodiment of the present invention, the thermosetting resin may be a silicone resin or a silicone rubber, in the surface-modified member.

One embodiment of the present invention is a coated article in which a coating film is provided on at least a part of the surface on the surface-modifying layer-side of the surface-modified member.

One embodiment of the present invention is a printed article in which printing is performed on at least a part of the surface on the surface-modifying layer-side of the surface-modified member.

One embodiment of the present invention is a joined body in which an article is joined to at least a part of the surface on the surface-modifying layer-side of the surface-modified member through an adhesive.

One embodiment of the present invention is a method for producing a surface-modified member formed using the surface-modifying sheet according to any one of claims 1 to 5 and the thermosetting resin, comprising providing the surface-modifying layer on at least a part of the surface of the thermosetting resin in a step of molding the surface-modified member.

In one embodiment of the present invention, the method for producing a surface-modified member is
preferably that:
the thermosetting resin is an uncured thermosetting resin, and
the component that reacts with a thermosetting resin contains a mixture of a polymer component containing no group having an unsaturated bond having reactivity and a peroxide, or a polymer component containing a group having an unsaturated bond having reactivity.

In one embodiment of the present invention, the method for producing a surface-modified member is preferably that:
the thermosetting resin is a cured thermosetting resin, and
the component that reacts with the thermosetting resin contains a mixture of a polymer component containing no group having an unsaturated bond having reactivity and a peroxide, or a curing agent and a polymer component containing a group having an unsaturated bond having reactivity.

In one embodiment of the present invention, in the method for producing a surface-modified member, the thermosetting resin may be a thermosetting elastomer.

In one embodiment of the present invention, in the method for producing a surface-modified member, the thermosetting resin may be a non-diene rubber containing no double bond.

In one embodiment of the present invention, in the method for producing a surface-modified member, the thermosetting resin may be a silicone resin or a silicone rubber.

### ADVANTAGEOUS EFFECTS OF INVENTION

The surface-modifying sheet according to one embodiment of the present invention has excellent adhesive force to a thermosetting resin and can evenly form a surface-modifying layer.

Additionally, the surface-modifying sheet that enables integral molding of a surface-modifying layer and a thermosetting resin in forming a surface-modified member can be provided.

### BRIEF DESCRIPTION OF DRAWINGS

FIG. 1 is a schematic cross-sectional view showing one example of a surface-modified member.
FIG. 2 is a schematic cross-sectional view showing one example of a surface-modifying sheet.
FIG. 3 is a schematic cross-sectional view showing an embodiment in which the surface-modifying layer-side of a surface-modifying sheet, which is a laminate of a release sheet and a surface-modifying layer, is placed on at least a part of the surface of a thermoplastic resin.
FIG. 4 is a schematic cross-sectional view showing one example of a coated article.

### DESCRIPTION OF EMBODIMENTS

In the present specification, the term "at least a part of the surface of a thermosetting resin" means at least a part in the entire surface of a thermosetting resin. For example, when the thermosetting resin is a plate shape, a sheet shape or a film shape, the term means a part of at least one surface, the whole of at least one surface, and the like.

The embodiments of the present invention are described in detail below.

The surface-modifying sheet according to the embodiment of the present invention comprises a release sheet and a surface-modifying layer, and the surface-modifying layer contains a component that reacts with a thermosetting resin.

In the surface-modifying sheet in the embodiment of the present invention, the surface-modifying layer is a sheet shape. Thus, the surface-modifying layer is not applied to the surface of a member or the like, but can be placed thereon to form a laminate or can be integrally molded with the member or the like. Thus, this prevents occurrence of unevenness due to generation of cissing, and can provides the surface-modifying layer in a uniform thickness on the surface of a member or the like. Furthermore, this can suppress decrease in yield due to protrusion or the like, when the surface-modifying layer is provided on a part of the surface of a member.

### [Surface-modifying layer]

The surface-modifying layer in the embodiment of the present invention contains a component that reacts with a thermosetting resin. Containing a component that reacts with a thermosetting resin in the surface-modifying layer causes chemical bond by chemical reaction to easily form a mixed layer, when the surface-modifying layer is used to a member containing a thermosetting resin. This can lead to form a surface-modifying layer having excellent adhesive force.

### (Thermosetting resin)

The thermosetting resin is not limited so long as it is a resin that involves a curing reaction by heating. For example, the thermosetting resin includes a thermosetting elastomer, a phenol resin, an amino resin, an unsaturated polyester resin, an epoxy resin, a polyurethane resin, a silicone resin and a thermosetting polyimide resin.

The thermosetting resin may be a thermosetting elastomer.

The thermosetting elastomer means a resin that elastically deforms after curing by heating.

The thermosetting elastomer may be a cured elastomer and may be an uncured elastomer. For example, the thermosetting elastomer includes a diene rubber containing a double bond and a non-diene rubber containing no double bond.

The thermosetting elastomer is preferably an elastomer that crosslinks by heating, and the representative crosslinking method of the thermosetting elastomer includes sulfur crosslinking, peroxide crosslinking and resin crosslinking.

The thermosetting resin may be a diene rubber containing a double bond.

When the thermosetting resin is a diene rubber containing a double bond, the component that reacts with the thermosetting resin, which is contained in the surface-modifying layer, preferably contains a component that causes sulfur-crosslinking, peroxide-crosslinking or resin-crosslinking with the diene rubber, and more preferably contains a curing agent.

In sulfur-crosslinking or resin-crosslinking, hydrogen located next to the double bond contained in the diene rubber is pulled out by a sulfur radial or a halide, and the hydrogen is allowed to react with a double bond in a polymer component contained in the surface-modifying layer, to improve adhesive force.

In peroxide-crosslinking, a peroxide makes a double bond part contained in the diene rubber to be a radical, and the radical is reacted with a double bond site in the polymer component contained in the surface-modifying layer, to improve adhesive force.

The diene rubber containing a double bond includes natural rubber (NR), isoprene rubber (IR), butadiene rubber (BR), styrene-butadiene rubber (SBR), chloroprene rubber (CR), nitrile rubber, norbornene rubber (NOR) and acrylonitrile-butadiene rubber (NBR). The diene rubber containing a double bond is preferably butadiene rubber.

The thermosetting resin may be a non-diene rubber containing no double bond. When the thermosetting resin is a non-diene rubber containing no double bond, the component that reacts with the thermosetting resin, which is contained in the surface-modifying layer, preferably contains a group that causes peroxide-crosslinking with the non-diene rubber, and is more preferably a mixture of the polymer component containing no group having an unsaturated bond having reactivity and a peroxide.

In peroxide-crosslinking, a peroxide generates radicals due to thermal decomposition, hydrogen is pulled out from a carbon-carbon bond contained in the non-diene rubber by a peroxide radical generated, and the hydrogen reacts with a double bond site in the polymer component contained in the surface-modifying layer. When the polymer component contained in the surface-modifying layer is a polymer component containing no double bond, hydrogen is pulled out from the non-diene rubber and the polymer component by a peroxide and a reaction occurs between saturated bonds. When the component that reacts with the thermosetting resin contained in the surface-modifying layer does not contain a group that causes peroxide-crosslinking with the non-diene rubber, silanol condensation is possible by adding a catalyst.

The non-diene rubber containing no double bond includes nitrile rubber, ethylene-propylene rubber (EPM), ethylene-propylene-diene rubber (EPDM), butyl rubber (IIR), acryl rubber (ACM), urethane rubber, chlorinated polyethylene, polysulfide rubber, fluororubber (FKM), silicone rubber, chlorosulfonated polyethylene and epichlorohydrin rubber (CO/ECO).

The non-diene rubber containing no double bond is preferably silicone rubber.

The thermosetting resin is preferably silicone resin or silicone rubber.

For example, when the thermosetting resin is silicone rubber, the reaction between the component that reacts with the thermosetting resin and the silicone rubber is peroxide crosslinking, and a radical generated by pulling out hydrogen from the silicone rubber reacts with a double bond site of the component that reacts with the thermosetting resin. Furthermore, even though a double bond site is not contained in the surface-modifying layer, a radical generated by pulling out hydrogen from a carbon-carbon bond site of the surface-modifying layer reacts with a radical generated in the silicone rubber by a peroxide.

As the silicone resin, any appropriate silicone resin can be used to the extent that the effects of the present invention are not impaired. The silicone resin may be one kind alone and may be a mixture of two or more kinds. The silicone resin may be a liquid silicone resin at room temperature and may be a solid silicone resin at room temperature. The silicone resin may be a condensed-type silicone resin and may be an addition-type silicone resin. The addition-type silicone resin is preferred. Additionally, the silicone resin may be a one-pack type silicone resin (for example, one-pack type room temperature curable (RTV) resin) that is dried alone and may be a two-pack type silicone resin (for example, two-pack room temperature curable (RTV) resin).

### [Component that reacts with thermosetting resin]

The component that reacts with a thermosetting resin is not limited so long as it is a component that causes a chemical reaction with a thermosetting resin or creates a bond such as chemical bond with a thermosetting resin, and any component can be used. The component includes a curing agent, a polymer component containing a group having an unsaturated bond having reactivity, a mixture of a polymer component containing no group having an unsaturated bond having reactivity and a peroxide, and a halide compound. The component more preferably contains at least one of a curing agent, a polymer component containing a group having an unsaturated bond having reactivity, and a mixture of a polymer component containing no group having an unsaturated bond having reactivity and a peroxide.

Containing a component that reacts with a thermosetting resin in the surface-modifying sheet allows for forming a mixed layer of the component that reacts with the thermosetting resin in the surface-modifying layer and the thermosetting resin to easily cause chemical reaction or chemical bond, when a surface-modifying sheet has been used in, for example, a surface-modified member. The mixed layer is a layer of a welded and mixed part obtained by providing the surface-modifying layer on at least a part of the surface of the thermosetting resin, followed by heating and welding them to have the interfaces of the surface-modifying layer and the thermosetting resin melted and contacted to each other so that those are welded and mixed.

Furthermore, further containing a curing agent allows chemical reaction or chemical bond to occur more easily.

When the thermosetting resin is an uncured thermosetting resin, the component that reacts with a thermosetting resin preferably contains a mixture of a polymer component containing no group having an unsaturated bond having reactivity and a peroxide, a curing agent or a polymer component containing a group having an unsaturated bond having reactivity, and more preferably contains a polymer component containing a group having an unsaturated bond having reactivity and still more preferably contains a curing agent and a polymer component containing a group having an unsaturated bond having reactivity. This is because, in heat-curing an uncured thermosetting resin, the thermosetting resin is mixed with a polymer component containing a group having an unsaturated bond having reactivity or a polymer component containing no group having an unsaturated bond having reactivity, in the surface-modifying layer, to easily cause chemical reaction or chemical bond.

When the thermosetting resin is a cured thermosetting resin, the component that reacts with a thermosetting resin preferably contains a mixture of a polymer component containing no group having an unsaturated bond having reactivity and a peroxide, or a curing agent and a polymer component containing a group having an unsaturated bond having reactivity, and more preferably contains a curing agent and a polymer component containing a group having an unsaturated bond having reactivity.

This is because containing a curing agent and a polymer component containing a group having an unsaturated bond having reactivity in the surface-modifying layer causes chemical reaction and chemical bond with a cured thermosetting resin.

When the polymer component that reacts with a thermosetting resin is a polymer component containing a group having an unsaturated bond having reactivity, the polymer component containing a group having an unsaturated bond having reactivity acts as a binder and allows a surface-modifying sheet to be formed easily.

The unsaturated bond having reactivity includes an ethylenic double bond and a non-aromatic double bond, and an ethylenic double bond is preferred.

The polymer component containing a group having an ethylenic double bond is not limited so long as it reacts with a thermosetting resin, and a polymer component having an ethylenic double bond in a side chain is preferred. This is because chemical reaction of the thermosetting resin with a double bond site of the polymer component containing a group having an ethylenic double bond enhances adhesive force.

The polymer component containing a group having a group having reactivity is preferably a polymer component containing a group having an ethylenic double bond. For example, one of an isobutylene polymer, a butadiene polymer, an isoprene polymer and a copolymer containing at least one selected from those polymers is preferably contained, and one of an isobutylene polymer, a butadiene rubber and a copolymer containing at least one selected from those polymers is more preferably contained.

For example, when the polymer component containing a group having an ethylenic double bond is a butadiene polymer, a radical is generated by pulling out hydrogen from a methyl group of the thermosetting elastomer, and the radical reacts with a double bond site in the butadiene polymer.

The isobutylene polymer may be a homopolymer (homoisobutylene) of isobutylene and may be a copolymer comprising isobutylene as a main monomer. The copolymer include a copolymer of isobutylene and normal butylene, a copolymer of isobutylene and isoprene (regular butyl rubber, chlorinated butyl rubber, brominated butyl rubber, partially crosslinked butyl rubber or the like), their vulcanizates and their modified products (for example, products modified with a functional group such as a hydroxyl group, a carboxyl group, an amino group or an epoxy group).

The butadiene polymer may be a homopolymer of butadiene and may be a copolymer comprising butadiene as a main monomer. The copolymer includes a copolymer of butadiene and styrene and a copolymer of butadiene and acrylonitrile.

The isoprene copolymer may be a homopolymer of isoprene and may be a copolymer comprising isoprene as a main monomer. The copolymer includes a copolymer of isoprene and isobutylene.

The copolymer includes a styrene-based AB-type diblock copolymer (diblock copolymer) such as a styrene-butadiene copolymer (SB) or a styrene-isoprene copolymer (SI); a styrene-based ABA-type block copolymer (triblock copolymer) such as a styrene-butadienestyrene copolymer (SBS) or a styrene-isoprene-styrene copolymer (SIS); a styrene-based ABAB-type block copolymer (tetrablock copolymer) such as a styrene-butadiene-styrene-butadiene copolymer (SBSB) or a styrene-isoprene-styrene-isoprene copolymer (SISI); a styrene-based ABABA type block copolymer (pentablock copolymer) such as a styrene-butadiene-styrene-butadiene-styrene copolymer (SBSBS) or a styrene-isoprene-styrene-isoprene-styrene copolymer (SISSIS); a multiblock copolymer having those structural units; a styrene-butadiene copolymer; and a copolymer containing a styrene-isoprene random copolymer or the like as a main ingredient. A styrene-isoprene-styrene copolymer (SIS) is preferred.

When the component that reacts with a thermosetting resin is a mixture of the polymer component containing no group having an unsaturated bond having reactivity and a peroxide, hydrogen is pulled out from the polymer component containing no group having an unsaturated bond having reactivity by the peroxide. Thus, when the thermosetting resin is a silicone rubber, the silicone rubber reacts with the polymer component containing no group having an unsaturated bond having reactivity.

The peroxide includes an organic peroxide. The organic peroxide is a compound having oxygen-oxygen (-O-O-) bond in the molecule. The oxygen-oxygen (-O-O-) bond is relatively easily cut by heat to generate reactive radicals. The organic peroxide specifically includes hydroperoxide, dialkyl peroxide, peroxy ester, diacyl peroxide, peroxy dicarbonate, peroxy monocarbonate, peroxy ketal, alkyl peroxy ester and ketone peroxide.

The polymer component containing no group having an unsaturated bond having reactivity is preferably at least one selected from a styrene-based polymer, a polyurethane-based polymer, a polyester-based polymer, a polyamide-based polymer and a (meth)acrylic polymer.

The styrene-based polymer includes a styrene-based AB-type diblock copolymer (diblock copolymer) such as a styrene-butylene copolymer; a styrene-based ABA-type block copolymer (triblock copolymer) such as a styrene-butylene-styrene copolymer; a styrene-ethylene-butylene-styrene block copolymer (SEBS); and a styrene-ethylene-propylene-styrene block copolymer (SEPS).

The polyurethane polymer includes a polymer comprising polyester or polyether and isocyanate as main ingredients.

The polyester-based polymer includes a blend of a saturated polyester (for example, polyethylene terephthalate or polybutylene terephthalate) and a modified polyolefin (for example, an acid-modified polyolefin such as acrylic acid-modified polyethylene or acrylic acid-modified polypropylene; or an epoxy-modified polyolefin) or a rubber-based polymer (for example, a thermoplastic elastomer such as ethylene-propylene rubber, polyester elastomer or ethylene-acryl rubber); and a polymer comprising polyethylene naphthalate as a main ingredient.

The polyamide-based polymer includes a polymer comprising amino acid, lactam or diamine and dicarboxylic acid, as main ingredients. The polymer includes nylon 6 and nylon 66.

The (meth)acrylic polymer includes a polymer in which a monomer includes (meth)acrylic acid alkyl ester such as ethyl acrylate, butyl acrylate, 2-ethylhexyl acrylate, isooctyl acrylate or isononyl acrylate, as a main component, and as necessary, a modifying monomer such as acrylonitrile, vinyl acetate, styrene, methyl methacrylate, acrylic acid, maleic anhydride, vinyl pyrrolidone, glycidyl methacrylate, dimethylaminoethyl methacrylate, hydroxyethyl acrylate or acryl amide, added thereto is a main ingredient.

The main ingredient is a component occupying the largest mass proportion in the components.

The curing agent may be a curing agent that reacts with the thermosetting resin and may be a curing agent that accelerates a reaction between the thermosetting resin and the polymer component containing a group having an unsaturated bond having reactivity. Although the curing agent is not limited, it is preferably at least one selected from a silane-based curing agent, an organotitanium-based curing agent, an amine-based curing agent, an imidazole-based curing agent and an acid anhydride-based curing agent. Above all, a silane-based curing agent or an organotitanium-based curing agent is more preferred, and an organotitanium-based curing agent is still more preferred. Two or more kinds of curing agents may be used in combination, and a silane-based curing agent and an organotitanium-based curing agent are preferably used in combination.

The silane-based curing agent includes silicone alkoxy oligomer and alkoxysilane.

The organotitanium-based curing agent includes tetrabutyl titanate, tetraethyl titanate, tetraisopropyl titanate and tetraphenyl titanate.

The amine-based curing agent includes EPOMIN (registered trademark) series (manufactured by Nippon Shokubai Co., Ltd.) as polyethyeneimine as a tertiary amine compound.

The imidazole-based curing agent includes CURESOL series (imidazole-based epoxy resin curing agent, manufactured by Shikoku Chemicals Corporation).

The acid anhydride-based curing agent includes methyl tetrahydrophthalic anhydride and (methyl)hexahydrophthalic anhydride.

The content of the curing agent in the surface-modifying layer is not limited. From the standpoint of transferability, the content is preferably 10 parts by mass or more, more preferably 50 parts by mass or more and still more preferably 70 parts by mass or more, per 100 parts by mass of the polymer component containing a group having an unsaturated bond having reactivity. On the other hand, for adhesive force, the content is preferably 1000 parts by mass or less, more preferably 500 parts by mass or less, still more preferably 400 parts by mass or less and particularly preferably 200 parts by mass or less.

When two or more kinds of the curing agents are used in combination, the total amount of the curing agents is in the above ranges.

The surface-modifying layer may contain a halogenated compound as the compound that reacts with a thermosetting resin. The halogenated compound includes a chlorine-based compound. The chlorine-based compound is preferably a chlorine-based polymer and more preferably a chlorinated polypropylene.

For example, in the case of using the surface-modifying layer containing a chlorine-based compound for a member containing a thermosetting resin, a surface-modifying composition described hereinafter may be applied to the member containing a thermosetting resin, and a sheet-shape surface-modifying layer may be thermally transferred to the member containing a thermosetting resin. Thermal transfer is preferred. In particular, when the thermosetting resin is a diene rubber containing a double bond, thermal transfer is preferred.

Forming the surface-modifying layer containing a chlorine-based compound in a sheet and performing thermal transfer of the sheet allow for suppressing the occurrence of cissing and protrusion uniformly forming the surface-modifying layer containing a chlorine-based compound on a thermosetting resin member to exert stable adhesive force.

The surface-modifying layer can be formed using a surface-modifying composition described hereinafter.

The surface-modifying composition includes a solution obtained by dissolving a component constituting the surface-modifying layer in a solvent. For example, the solution may be prepared by dipping a mixture containing the polymer component containing a group having an unsaturated bond having reactivity or the polymer component containing no group having an unsaturated bond having reactivity, as a main component, and as necessary, a curing agent or a peroxide, in a solution by the conventional method, followed by stirring under heating, thereby obtaining a polymer solution, and adding a crosslinking agent or the like as necessary.

The surface-modifying layer can further contain any appropriate additive as necessary. The additive includes an initiator, a crosslinking agent, a tackifier, a plasticizer, a pigment, a dye, a filler, an age resister, a conductive material, an antistatic agent, an ultraviolet absorber, a light stabilizer, a peel controlling agent, a softener, a surfactant, a flame retarder and an antioxidant.

The thickness of the surface-modifying layer is preferably 0.001 µm or more, more preferably 0.01 µm or more and still more preferably 0.05 µm or more, from the standpoint of adhesive force. On the other hand, the thickness is preferably 100 µm or less, more preferably 30 µm or less and still more preferably 10 µm or less, from the standpoint of adhesive force.

### [Release sheet]

The release sheet is not limited, but preferably has heat resistance of 100°C or higher and tensile modulus at 100°C of 1 GPa or less. The release sheet is preferably a non-silicone type resin sheet, and includes a fluorine resin sheet film (NITOFLON, manufactured by Nitto Denko Corporation), a polyester resin sheet, a polymethyl pentene resin sheet (OPULENT (registered trademark), manufactured by Mitsui Chemicals Tohcello Inc.) and a polystyrene resin sheet (Oidys (registered trademark), manufactured by Kurabo Industries Ltd.)

The thickness of the release sheet is preferably 1 µm to 1000 µm, more preferably 10 µm to 500 µm, still more preferably 10 µm to 300 µm and particularly preferably 5 µm to 200 µm, from the standpoint of shape followability.

### [Producing of surface-modifying sheet]

The surface-modifying sheet can be produced by any appropriate method. For example, the method includes a method of dipping a release sheet in a solution (surface-modifying composition) containing a material of a surface-modifying layer and a solvent and then drying as necessary, a method of brushing a surface-modifying composition to the surface of a release sheet and then drying as necessary, a method of applying a surface-modifying composition to the surface of a release sheet by various coaters and then drying as necessary, and a method of spray coating a surface-modifying composition to the surface of a release sheet and then drying as necessary.

The surface-modifying composition includes a solution obtained by dissolving a material constituting the surface-modifying layer in a solvent.

The solvent includes alcohols such as methanol, ethanol or isopropyl alcohol; ketones such as methyl ethyl ketone; esters; aliphatic, alicyclic and aromatic hydrocarbons; halogenated hydrocarbons; amides such as methyl formamide; sulfoxides such as dimethyl sulfoxide; and ethers such as dimethyl ether or tetrahydrofuran. The solvent may be one kind alone and may be two or more kinds.

The solid content concentration in the surface-modifying composition can be appropriately set depending on the purpose. The mass ratio is preferably 0.01 mass% to 80 mass%, more preferably 0.05 mass% to 60 mass% and still more preferably 0.1 mass% to 50 mass%, from the standpoint of easy handling and the like.

The surface-modifying composition may contain various additives such as a pH regulator, a crosslinking agent, a viscosity modifier (thickener or the like), a leveling agent, a peel controlling agent, a plasticizer, a softener, a filler, a coloring agent (pigment, dye or the like), a surfactant, an antistatic agent, a preservative, an age resister, an ultraviolet absorber, an antioxidant and a light stabilizer, as necessary.

### [Laminate]

The laminate according to the embodiment of the present invention is a laminate in which and a surface-modifying layer are laminated on the surface of a thermosetting resin and a mixed layer that the thermosetting resin and the surface-modifying layer are mixed is preferably provided between the thermosetting resin and the surface-modifying layer.

The laminate may further have a layer containing other resin component. The other resin component may be a thermoplastic resin and may be a thermosetting resin.

### [Surface-modified member]

The surface-modified member according to the embodiment of the present invention is a surface-modified member in which a surface-modifying layer is laminated on the surface of a thermosetting resin. The surface-modifying layer contains the component that reacts with the thermosetting resin, and the thermosetting resin and the surface-modifying layer are bonded to each other by a chemical reaction.

The surface-modified member preferably has a mixed layer that the thermosetting rein and the surface-modifying layer are mixed between the thermosetting resin and the surface-modifying layer, and the thermosetting resin and the surface-modifying layer are preferably bonded to each other in the mixed layer by a chemical reaction in the mixed layer.

The above descriptions can be applied to the thermosetting resin, thermosetting elastomer and surface-modifying layer as they are.

The mixed layer is a layer that the thermosetting resin and the surface-modifying layer are mixed, and is a layer of a welded and mixed part obtained by providing the surface-modifying layer on at least a part of the surface of the thermosetting resin, followed by heating and welding them to have the interfaces of the surface-modifying layer and the thermosetting resin melted and contacted to each other so that those are welded and mixed..

The thickness of the mixed layer can be appropriately determined depending on the conditions of heat welding and the kind of the thermosetting resin and surface-modifying layer. The thickness of the mixed layer is preferably 1.5 nm or more and more preferably 2.0 nm or more.

In the surface-modified member according to the embodiment of the present invention, the thickness of the thermosetting resin is, for example, 0.001 mm to 100 mm.

In the surface-modified member according to the embodiment of the present invention, the thickness of the surface-modifying layer is not particularly limited, and is preferably 0.001 µm to 100 µm, more preferably 0.01 µm to 10 µm, still more preferably 0.05 µm to 5 µm and particularly preferably 0.1 µm to 3 µm.

The surface-modified member according to the embodiment of the present invention is preferably obtained by the method for producing the surface-modified member of the present invention.

The coated article according to the embodiment of the present invention is an article in which a coating film is provided on at least a part of the surface on the surface-modifying layer-side of the surface-modified member.

It is formed using the surface-modifying sheet in which the surface-modifying layer is formed in a sheet shape. Thus, this allows for preventing occurrence of unevenness by cissing or the like that has occurred in the application on the surface of a member. Furthermore, since the surface-modifying layer has a sheet shape, the surface-modifying layer can be formed on the surface of a member in uniform thickness.

The coating film is not limited but includes various coating films such as a polyester-melamine type, an alkyd-melamine type, an acryl-melamine type, an acryl-urethane type, an acryl-polyacid curing agent type, and a plating treatment.

The coating method of the coating film is not limited, but the ordinary method such as brush coating, roller coating, spray coating or coating with various coaters can be used. The coating amount is not limited. Furthermore, the time and temperature for heating the coating film, and the like can be appropriately determined by a paint to be used, a coating amount, and the like.

The printed article according to the embodiment of the present invention is an article in which printing is performed on at least a part of the surface on the surface-modifying layer-side of the surface-modified member.

It is formed using the surface-modifying sheet in which the surface-modifying layer is formed in a sheet shape. Thus, this allows for evenly forming the surface-modifying layer on the surface of non-printed media. Furthermore, since the surface-modifying layer can be formed evenly on a three-dimensional shape, a printed article having uniform thickness can be obtained.

The printing includes inkjet printing.

The joined body according to the embodiment of the present invention is an object in which an article is joined to at least a part of the surface on the surface-modifying layer-side of the surface-modified member through an adhesive. The article that can be joined includes an electronic part, an exterior part of automobile (particularly a soft hollow member made of rubber, such as a weather strip), a protective part of a body and a decorative part.

The adhesive is not limited. As the adhesive, the conventional additives can be used such as a rubber-type adhesive, a urethane-type adhesive (acryl urethane-type adhesive), an acrylic-type adhesive, a silicone-type adhesive, a polyester-type adhesive, a polyamide-type adhesive, an epoxy-type adhesive, a vinyl alkyl ether-type adhesive and a fluorine-type adhesive. Above all, a rubber-type adhesive and a urethane-type (acryl urethane-type) adhesive are particularly preferred. The adhesive may be alone and may be a mixture of two or more kinds.

### [Method for producing surface-modified member]

The method for producing a surface-modified member according to the embodiment of the present invention is a method for producing a surface-modified member molded using the surface-modifying sheet and a thermosetting resin, including providing the surface-modifying layer on at least a part of the surface of the thermosetting resin in a step of molding the surface-modified member.

When the thermosetting resin is an uncured thermosetting resin, a component that reacts with the thermosetting resin preferably contains a mixture of a polymer component containing no group having an unsaturated bond having reactivity and a peroxide or a polymer component containing a group having an unsaturated bond having reactivity. Furthermore, the polymer component containing no group having an unsaturated bond having reactivity is preferably at least one selected from a styrene polymer, a polyurethane polymer, a polyester polymer, a polyamide polymer and a (meth)acryl polymer, and the polymer component containing a group having an unsaturated bond having reactivity preferably contains any of an isobutylene polymer, a butadiene polymer, an isoprene polymer and a copolymer containing at least one selected from those.

When the thermosetting resin is a cured thermosetting resin, the component that reacts with the thermosetting resin preferably contains a mixture of a polymer component containing no group having an unsaturated bond having reactivity and a peroxide, or a curing agent and a polymer component containing a group having an unsaturated bond having reactivity. Furthermore, it is preferred that the polymer component containing no group having an ethylenic double bond is at least one selected from a styrene polymer, a polyurethane polymer, a polyester polymer, a polyamide polymer and a (meth)acryl polymer, the polymer component containing a group having an unsaturated bond having reactivity contains any of an isobutylene polymer, a butadiene polymer, an isoprene polymer and a copolymer containing at least one selected from those, and the curing agent is at least one selected from a silane-based curing agent, an organotitanium-based curing agent, an amide-based curing agent, an imidazole-based curing agent and an acid anhydride-based curing agent.

The above descriptions as they are can be applied to the thermosetting resin, the thermosetting elastomer, the surface-modifying layer, the curing agent, the polymer component containing a group having an unsaturated bond having reactivity, and the mixture of the polymer component containing no group having an unsaturated bond having reactivity and a peroxide.

In the method for producing a surface-modified member according to the embodiment of the present invention, the surface-modifying layer is provided on at least a part of the surface of the thermosetting resin in a step of molding the surface-modified member.

As the molding method, the conventional methods such as press molding, injection molding or blow molding can be appropriately used.

As the molding apparatus, a hot press apparatus, an injection molding apparatus or a double belt-type press molding apparatus can be used.

The heating method includes oven heating, infrared heating and high frequency heating.

For example, after previously fixing the surface-modifying sheet to the inside of a mold, the thermosetting resin is charged in the mold to perform integral molding by injection molding, thereby adhering the surface-modifying sheet to one surface or both surfaces of the thermosetting resin in a step of molding the surface-modifying sheet. Thus, the surface-modifying layer can be provided on at least a part of the surface of the thermosetting resin.

The surface-modifying sheet is placed on a plate-shaped or film-shaped thermosetting resin such that the surface-modifying layer-side of the surface-modifying sheet contacts the thermosetting resin, and resulting assembly is arranged in a mold. Integral molding is performed with press molding, and the surface-modifying sheet is adhered to one surface or both surfaces of the thermosetting resin in a step of molding. Thus, the surface-modifying layer can be provided on at least a part of the surface of the thermosetting resin. Press molding allows for performing the molding of the thermosetting resin simultaneously with the surface modification treatment of the thermosetting resin, and this provides high productivity and low costs.

The heating temperature during molding differs depending on the kind of the thermosetting resin and the kind of a resin to be used in the surface-modifying sheet, and can be appropriately selected. The heating temperature is preferably 400°C or lower.

The pressure during molding is not limited and is appropriately determined in view of shape and properties of the surface-modified member, and the like. The pressure is preferably 0 to 10 MPa.

Peeling off the release sheet after integrally molding the surface-modifying sheet and the thermosetting resin make the surface-modifying layer to have been transferred to the surface of the thermosetting resin. Thus, the surface-modified member having a modified surface is obtained. The release sheet may be peeled off before the molding step and may be peeled off at any point of or after the molding step.

Thus, the surface-modified member having satisfactory adhesiveness between the surface-modifying layer and the thermosetting resin and uniform thickness of the surface-modifying layer can be easily obtained.

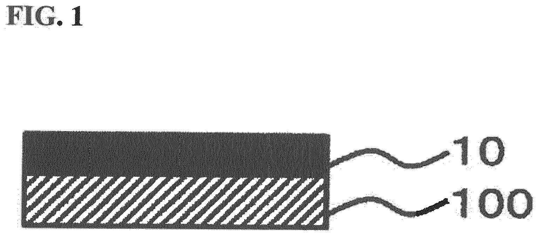

By the production method described above, a surface-modifying layer 10 is provided on the surface of a resin 100 as shown in FIG. 1, and thus a surface-modified member is obtained. The resin 100 is a thermosetting resin. In FIG. 1, the surface-modifying layer 10 is laminated on the surface of the resin 100, but preferably a mixed layer (not shown) in which the resin (thermosetting resin) and the surface-modifying layer have been mixed together is provided between the resin 100 and the surface-modifying layer 10.

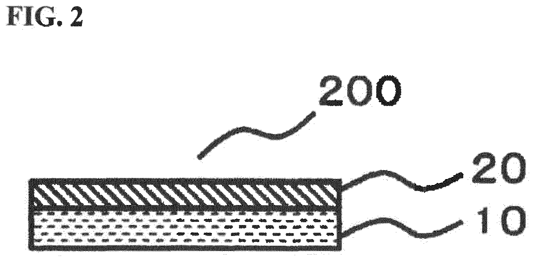

The surface-modifying sheet, which is a laminate of the release sheet and the surface-modifying layer, is a surface-modifying sheet 20 which is a laminate of a release sheet 20 and the surface-modifying layer 10, as shown in FIG. 2.

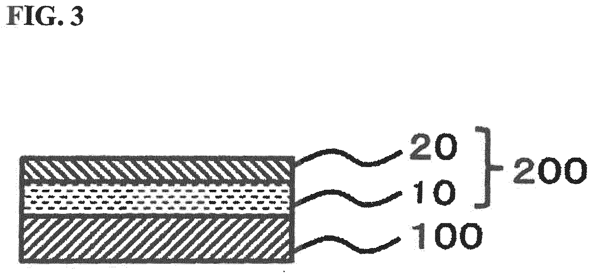

In the method for producing a surface-modified member according to the embodiment of the present invention, the embodiment that the surface-modifying layer-side of the surface-modifying sheet, which is a laminate of the release sheet and the surface-modifying layer, is placed on at least a part of the surface of the resin (thermosetting resin) is an embodiment that a surface-modifying sheet 200 is placed on the surface of the resin 100 such that the surface-modifying layer-side 10 of the surface-modifying sheet 200 is the surface-side of the resin 100, as shown in FIG. 3.

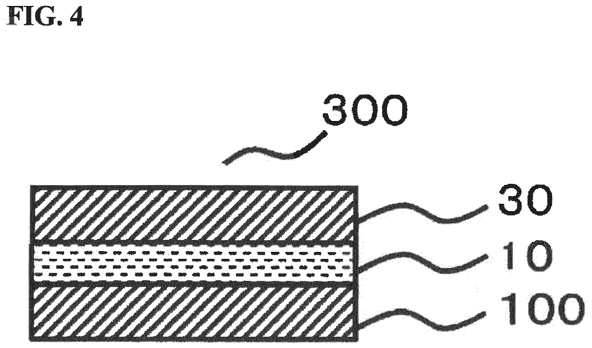

As one example of the coated article according to the embodiment of the present invention, a coated article 300 in which a coating film 30 is provided on at least a part of the surface on the surface-modifying layer-side of the surface-modified member in which the surface-modifying layer 10 is provided on the surface of the resin 100 is shown in FIG. 4.

In the surface-modified member according to the embodiment of the present invention, at least a part of the surface of the thermosetting resin is modified with the surface-modifying layer. Thus, the surface-modified member has excellent adhesive force to other resin component and exerts excellent adhesive force to a thermoplastic resin. In joining a coating film, a printing or an article to the surface-modified member, a pretreatment such as a preheating treatment, a corona discharge treatment, an electron irradiation treatment, an ultraviolet irradiation treatment, a flame plasma treatment, an atmospheric pressure plasma treatment or a low pressure plasma treatment may be applied to the surface-modified member. However, even though a pre-treatment is not applied, a coated article, a printed article and a joined body, each having sufficient adhesive strength are obtained.

### Examples

The present invention is specifically described below by reference to examples, but it should be understood that the present invention is not construed as being limited to those examples.

### [Evaluation]

### (Adhesive force test (180° peel))

Using a tensile tester (apparatus name: AUTOGRAPH AG-IS, manufactured by Shimadzu Corporation), VR5300 was peeled off from each of joined bodies obtained in Examples 1 to 7, Comparative Examples 1 to 3, Reference Example, Example 12 and Example 13 described below under the conditions of tensile rate: 300 mm/min and peel angle: 180° according to JIS Z0237:2009, and adhesive force (N/20 mm) was measured.

### <Adhesive force test (T-shaped peel)>

Using a tensile tester (apparatus name: AUTOGRAPH AG-IS, manufactured by Shimadzu Corporation), joined bodies obtained in Examples 8 to 11 and Comparative Examples 4 to 6 described below were peeled in a tensile rate of 300 mm/min, and adhesive force (N/20 mm) was measured.

### [Example 1]

A surface-modifying composition (20 mass% toluene solution) having a surface-modifying layer component described below was applied to a release sheet (No. 900UL, 50 µm, manufactured by Nitto Denko Corporation) and then dried (120°C, 3 min). Thus, a surface-modifying sheet having a 1 µm thick surface-modifying layer was prepared.

The surface-modifying sheet thus prepared was placed on a curable silicone rubber (product number: K-125, manufactured by Togawa Rubber Co., Ltd.) such that the surface-modifying layer-side faces inside, and thermally transferred (165°C, 7 min) by press molding. Thus, a surface-modified member was manufactured. The silicone rubber and the surface-modifying layer are crosslinked by a peroxide contained in the curable silicone rubber by the heat treatment of press molding.

Thereafter, the prepared release sheet of the surface-modified member was peeled off, and VR5300 (SIS adhesive tape (containing SIS block polymer), manufactured by Nitto Denko Corporation) having a size of 80 mm × 20 mm was adhered to the surface-modified member. Thus, a joined body was manufactured.

Surface-modifying layer component:
TA-21 (tetrabutyl titanate, manufactured by Matsumoto Fine Chemical Co., Ltd.): 100 parts by mass
OFS-6697 (silane compound, manufactured by Dow Corning Corp.): 200 parts by mass
QTC3520 (SIS block polymer, manufactured by Zeon Corporation): 100 parts by mass

### [Examples 2 to 7]

Surface-modifying sheets were prepared in the same manner as in Example 1, except that compositions of the surface-modifying layers were changed as shown in Table 1. Surface-modified members and joined bodies were prepared in the same manners as in Example 1 using the prepared surface-modifying sheets. Evaluation results of the produced joined bodied are shown in Table 1.

### [Comparative Example 1]

VR5300 (SIS adhesive tape (containing SIS block polymer), manufactured by Nitto Denko Corporation) having a size of 80 mm × 20 mm was adhered to a curable silicone rubber ((product number: K-125, manufactured by Togawa Rubber Co., Ltd.), and a joined body was produced.

### [Comparative Example 2]

A surface-modifying composition (20 mass% toluene solution) having surface-modifying layer components described below was applied to a release sheet (No. 900UL, 50 µm, manufactured by Nitto Denko Corporation) and then dried (120°C, 3 min). Thus, a surface-modifying sheet having a 1 µm thick surface-modifying layer was prepared.

The surface-modifying sheet thus prepared was placed on a curable silicone rubber (product number: K-125, manufactured by Togawa Rubber Co., Ltd.) such that the surface-modifying layer-side faces inside, and thermally transferred (165°C, 7 min) by press molding. Thus, a surface-modified member was produced.

Thereafter, the release sheet of the surface-modified member prepared was peeled off, and VR5300 (SIS adhesive tape (containing SIS block polymer), manufactured by Nitto Denko Corporation) having a size of 80 mm × 20 mm was adhered to the surface-modified member. Thus, a joined body was produced.

Surface-modifying layer component:
TA-21 (tetrabutyl titanate, manufactured by Matsumoto Fine Chemical Co., Ltd.): 100 parts by mass
OFS-6697 (silane compound, manufactured by Dow Corning Corp.): 200 parts by mass

### [Comparative Example 3]

Uncured silicone rubber (a mixture of KE9490-U (manufactured by Shin-Etsu Chemical Co., Ltd.) and C-8 (manufactured by Shin-Etsu Chemical Co., Ltd.) (composition: a silicone rubber obtained by blending C-8 (2 parts by mass) with KE9490-U (100 parts by mass)) was heat-cured (165°C, 7 min), and VR5300 (SIS adhesive tape (containing SIS block polymer), manufactured by Nitto Denko Corporation) having a size of 80 mm × 20 mm was then adhered to the cured silicone rubber. Thus, a joined body was produced.

### [Reference Example]

No. 5303W (silicone adhesive tape, manufactured by Nitto Denko Corporation) was adhered to a curable silicone rubber (product number: K-125, manufactured by Togawa Rubber Co., Ltd.) without surface modification treatment to produce a joined body.

Evaluation results of the joined bodied manufactured in Examples 1 to 7, Comparative Examples 1 to 3 and Reference Example are shown in Table 1.

### [Table 1]

**TABLE 1**

| | | | Example 1 | Example 2 | Example 3 | Example 4 | Example 5 | Example 6 | Example 7 | Comparative Example 1 | Comparative Example 2 | Comparative Example 3 | Reference Example |
|---|---|---|---|---|---|---|---|---|---|---|---|---|---|
| Surface-modifying layer component | Curing agent | OFS-6697 | 200 | - | 200 | - | - | - | - | - | 200 | - | - |
| | | KR-513 | - | - | - | 100 | - | - | - | - | - | - | - |
| | | X-41-1805 | - | - | - | - | 50 | - | - | - | - | - | - |
| | | TA-21 | 100 | 100 | 100 | 100 | 50 | 100 | - | - | 100 | - | - |
| | Polymer component | QTC3520 [phr] (SIS block polymer) | 100 | 100 | 100 | 100 | 100 | 100 | 100 | - | - | - | - |
| Thickness of surface-modifying layer | | [µm] | 1 | 15 | 3 | 3 | 3 | 3 | 3 | - | 1 | - | - |
| Formation method of surface-modifying layer | | | Sheet | Sheet | Sheet | Sheet | Sheet | Sheet | Sheet | - | Sheet | - | - |
| Thermosetting resin | Kind | | SI | SI | SI | SI | SI | SI | SI | SI | SI | SI | SI |
| | State | | Cured | Cured | Uncured | Uncured | Uncured | Uncured | Uncured | Cured | Cured | Uncured | Cured |
| Kind of tape/adhesive | | | VR5300 (SIS adhesive tape) | VR5300 (SIS adhesive tape) | VR5300 (SIS adhesive tape) | VR5300 (SIS adhesive tape) | VR5300 (SIS adhesive tape) | VR5300 (SIS adhesive tape) | VR5300 (SIS adhesive tape) | VR5300 (SIS adhesive tape) | VR5300 (SIS adhesive tape) | VR5300 (SIS adhesive tape) | No. 5303W (silicone adhesive tape) |
| 180° peel [N/20 mm] | | | 10.9 | 4.7 | 12 | 10.5 | 15.2 | 9 | 3.8 | 0.1 | 0.1 | 0.1 | 5.8 |

### (Surface-modifying layer component)

OFS-6697 (silane compound, manufactured by Dow Corning Corp.)
KR-513 (silicone alkoxy oligomer, manufactured by Shin-Etsu Chemical Co., Ltd.)
X-41-1805 (silicone alkoxy oligomer, manufactured by Shin-Etsu Chemical Co., Ltd.)
TA-21 (tetrabutyl titanate, manufactured by Matsumoto Fine Chemical Co., Ltd.)
QTC3520 (SIS block polymer, manufactured by Zeon Corporation)

### (Thermosetting resin)

Cured: Curable silicone rubber K-125 (silicone rubber, manufactured by Togawa Rubber Co., Ltd.)
Uncured: Uncurable silicone rubber, a mixture of KE9490-U (manufactured by Shin-Etsu Chemical Co., Ltd.) and C-8 (manufactured by Shin-Etsu Chemical Co., Ltd.)
(composition: a silicone rubber obtained by blending C-8 (2 parts by mass) with KE9490-U (100 parts by mass))

Even though the surface-modifying sheets containing the polymer component and the curing agent, according to Examples 1 to 6, were applied to either of a curable silicone rubber and an uncurable silicone rubber, those sheets exerted excellent adhesive force to SIS adhesive tape. The adhesive force was comparable to Reference Example in which a silicone adhesive tape was adhered to a curable silicone rubber.

It was shown that the surface-modifying sheets according to Examples 3 to 5 have excellent adhesive force as compared with the surface-modifying sheet according to Example 6, and using a titanium curing and a silicone curing agent in combination allowed for exerting more excellent adhesive force.

The surface modifying sheet containing no curing agent according to Example 7 exerted excellent adhesive force when applied to an uncured silicone rubber.

On the other hand, the surface-modifying sheet according to Comparative Example 2 had low adhesive force, and the adhesive force was the same level with Comparative Examples 1 and 3 that did not use a surface-modifying sheet.

### (Example 8)

The surface-modifying composition shown in Table 2 was applied to a release sheet (No. 900UL, 50 µm, manufactured by Nitto Denko Corporation) and then dried (120°C, 3 min). Thus, a surface-modifying sheet having a 5 µm thick surface-modifying layer was prepared. The surface-modifying sheet thus prepared was placed on a butadiene rubber (manufactured by Standard Test Piece Inc.) such that the surface-modifying layer-side faces inside, and thermally transferred (165°C, 5 min, pressure 2 MPa) by press molding. Thus, a surface-modified member (A) was produced.

Thereafter, a polyurethane (PU) adhesive was applied to the surface-modifying layer-side of the surface-modified member (A) and dried (60°C, 5 min). Thus, a surface-modified member (B) having an adhesive layer was produced. Adhesive surface-sides of two surface-modified members (B) were adhered to each other, and the resulting assembly was heat-preserved (40°C, 24 hr) with a load of above 20 kg/m² applied. Thus, a joined body was produced.

### (Examples 9 to 13)

Surface-modified members and joined bodies were produced in the same manners as in Example 8, except for changing the composition of the surface-modifying layer, the thermosetting resin and the adhesive as shown in Table 2.

### (Comparative Example 4)

A polyurethane adhesive was applied to a butadiene rubber as a thermosetting resin and then dried (60°C, 5 min). Thus, a thermosetting resin body having an adhesive layer was prepared. Adhesive sides of two thermosetting resin bodies each having an adhesive layer were adhered to each other, and the resulting assembly was heat-preserved (40°C, 24 hr) with a load of about 20 kg/m² applied. Thus, a joined body was produced.

### (Comparative Examples 5 and 6)

Joined bodies were produced in the same manner as in Comparative Example 4, except for changing the thermosetting resin and the adhesive as shown in Table 2.

Evaluation results of the joined bodies produced in Examples 8 to 13 and Comparative Examples 4 to 6 are shown in Table 2.

### [Table 2]

**TABLE 2**

| | | | Example 8 | Example 9 | Example 10 | Example 11 | Example 12 | Example 13 | Example 14 | Comparative Examples 5 | Comparative Example 6 |
|---|---|---|---|---|---|---|---|---|---|---|---|
| Surface-modifying layer component | Polymer component | P740NT | 100 | 100 | 100 | - | - | - | - | - | - |
| | | UH2170 (OH group-containing polymer) | - | 100 | - | - | - | - | - | - | - |
| | | RC-1028K | - | - | - | 100 | - | - | - | - | - |
| | | PHCEB14 (Acrylic polymer) | - | - | - | - | 100 | - | - | - | - |
| | | UCECOAT7850 | - | - | - | - | | 100 | - | - | - |
| Thickness of surface-modifying layer | | [µm] | 5 | 5 | 5 | 3 | 19 | 20 | - | - | - |
| Formation method of surface-modifying layer | | | Sheet | Sheet | Sheet | Sheet | Sheet | Sheet | - | - | - |
| Thermosetting resin | Kind | | BR | BR | BR | IIR | SIR | SIR | BR | BR | IIR |
| | State | | Cured | Cured | Cured | Cured | Uncured | Uncured | Cured | Cured | Cured |
| Kind of tape/adhesive | | | PU adhesive | PU adhesive | CR adhesive | H7008 (acryl foam) | VR5300 (SIS adhesive tape) | VR5300 (SIS adhesive tape) | PU adhesive | CR adhesive | H7008 (acryl foam) |
| 180° peel | | [N/20 mm] | - | - | - | - | 12.2 | 22.4 | - | - | - |
| T-shape peel | | [N/20 mm] | 3.4 | 5.1 | 14.3 | 23.2 | - | - | 1.4 | 7.8 | 7.9 |

### (Surface-modifying layer component)

P740NT (chloroprene rubber adhesive, manufactured by No-tape Industrial Co., Ltd.)
UH2170 (hydroxy group-containing acryl polymer, manufactured by Toagosei Co., Ltd.)
RC-1028K (chlorinated polypropylene, manufactured by LORD Japan, Inc.)
PHCEB14: Acrylic polymer (monomer composition: butyl acrylate/ethyl acrylate/methacryloyl group-containing monomer=50/50/17.6)
UCECOAT7850: Manufactured by Daicel-Allnex Ltd.

### (Thermosetting resin)

BR: Butadiene rubber (manufactured by Standard Test Piece Inc.)
IIR: Butyl rubber (manufactured by Akitsu Industry Co., Ltd.)
SIR: Silicone rubber (uncurable silicone rubber, a mixture of KE9490-U (manufactured by Shin-Etsu Chemical Co., Ltd.) and C-8 (manufactured by Shin-Etsu Chemical Co., Ltd.) (composition: a silicone rubber obtained by blending C-8 (2 parts by mass) with KE9490-U (100 parts by mass))

### (Adhesive)

Polyurethane rubber (PU) adhesive: Five parts by mass (solid content) of a curing agent UFE (isocyanate compound, manufactured by No-tape Industrial Co., Ltd.) were added to 100 parts by mass (solid content) of AS-560 (polyurethane resin, manufactured by No-tape Industrial Co., Ltd.), followed by stirring. Thus, the adhesive was prepared.

Chloroprene rubber (CR) adhesive: Three parts by mass (solid content) of a curing agent UFE (isocyanate compound, manufactured by No-tape Industrial Co., Ltd.) were added to 100 parts by mass (solid content) of 9000NT (chloroprene rubber, manufactured by No-tape Industrial Co., Ltd.), followed by stirring. Thus, the adhesive was prepared.

### (Adhesive tape)

VR5300: SIS adhesive tape, manufactured by Nitto Denko Corporation
H7008: Acryl foam adhesive tape, manufactured by Nitto Denko Corporation

When the surface-modifying sheets containing a chloroprene rubber as a polymer component, according to Examples 8 and 10, were applied to a curable butadiene rubber, those sheets exerted excellent adhesive force to both of PU adhesive and CR adhesive, as compared with Comparative Examples 4 and 5 in which the surface-modifying sheet was not used.

Example 9 containing a chloroprene rubber and an OH group-containing polymer as polymer components exerted more excellent adhesive force as compared with Example 8.

When the surface-modifying sheet containing a chlorinated polypropylene as a polymer component according to Example 11 was applied to a curable butyl rubber, the sheet exerted excellent adhesive force to an acryl foam as compared with Comparative Example 6 in which a surface-modifying sheet was not used.

Although the present invention has been described in detail and by reference to the specific embodiments, it is apparent to one skilled in the art that various modifications or changes can be made without departing the spirit and scope of the present invention.

This application is based on Japanese Patent Application No. 2018-085670 filed April 26, 2018, and Japanese Patent Application No. 2019-082960 filed April 24, 2019, the contents of which are incorporated herein by reference.

### REFERENCE SIGNS LIST

10: Surface-modifying layer
20: Release sheet
30: Coating film
100: Resin
200: Surface-modifying sheet
300: Coated article

## Claims

1. A surface-modifying sheet comprising a release sheet and a surface-modifying layer,
wherein the surface-modifying layer contains a component that reacts with a thermosetting resin.

2. The surface-modifying sheet according to claim 1, wherein the component that reacts with a thermosetting resin contains at least one of a curing agent, a polymer component containing a group having an unsaturated bond having reactivity, and a mixture of a polymer component not containing a group having an unsaturated bond having reactivity and a peroxide.

3. The surface-modifying sheet according to claim 1 or 2, wherein the thermosetting resin is a thermosetting elastomer.

4. The surface-modifying sheet according to claim 1 or 2, wherein the thermosetting resin is a non-diene rubber containing no double bond.

5. The surface-modifying sheet according to claim 1 or 2, wherein the thermosetting resin is a silicone resin or a silicone rubber.

6. A surface-modified member in which a surface-modifying layer is laminated on the surface of a thermosetting resin,
wherein the surface-modifying layer contains a component that reacts with the thermosetting resin, and the thermosetting resin is bonded to the surface-modifying layer by chemical reaction.

7. The surface-modified member according to claim 6, wherein the component that reacts with a thermosetting resin contains at least one of a curing agent, a polymer component containing a group having an unsaturated bond having reactivity, and a mixture of a polymer component not containing a group having an unsaturated bond having reactivity and a peroxide.

8. The surface-modified member according to claim 6 or 7, wherein the thermosetting resin is a thermosetting elastomer.

9. The surface-modified member according to claim 6 or 7, wherein the thermosetting resin is a non-diene rubber containing no double bond.

10. The surface-modified member according to claim 6, wherein the thermosetting resin is a silicone resin or a silicone rubber.

11. A coated article in which a coating film is provided on at least a part of the surface on the surface-modifying layer-side of the surface-modified member according to any one of claims 6 to 10.

12. A printed article in which printing is performed on at least a part of the surface on the surface-modifying layer-side of the surface-modified member according to any one of claims 6 to 10.

13. A joined body in which an article is joined to at least a part of the surface on the surface-modifying layer-side of the surface-modified member according to any one of claims 6 to 10 through an adhesive.

14. A method for producing a surface-modified member formed using the surface-modifying sheet according to any one of claims 1 to 5 and the thermosetting resin, comprising,
providing the surface-modifying layer on at least a part of the surface of the thermosetting resin in a step of molding the surface-modified member.

15. The method for producing a surface-modified member according to claim 14,
wherein the thermosetting resin is an uncured thermosetting resin, and the component that reacts with a thermosetting resin contains a mixture of a polymer component containing no group having an unsaturated bond having reactivity and a peroxide, or a polymer component containing a group having an unsaturated bond having reactivity.

16. The method for producing a surface-modified member according to claim 14,
wherein the thermosetting resin is a cured thermosetting resin, and the component that reacts with the thermosetting resin contains a mixture of a polymer component containing no group having an unsaturated bond having reactivity and a peroxide, or a curing agent and a polymer component containing a group having an unsaturated bond having reactivity.

17. The method for producing a surface-modified member according to any one of claims 14 to 16, wherein the thermosetting resin is a thermosetting elastomer.

18. The method for producing a surface-modified member according to any one of claims 14 to 16, wherein the thermosetting resin is a non-diene rubber containing no double bond.

19. The method for producing a surface-modified member according to any one of claims 14 to 16, wherein the thermosetting resin is a silicone resin or a silicone rubber.
